# EUROPÄISCHE PATENTSCHRIFT

(11) **EP 0 773 734 B1**
(45) Veröffentlichungstag und Bekanntmachung des Hinweises auf die Patenterteilung: **08.04.1998**
(21) Anmeldenummer: 95926905.1
(22) Anmeldetag: 15.07.1995
(51) Int. Cl.: A47J 31/06

(54) **TEEFILTER FÜR EINE KAFFEE- ODER TEEMASCHINE**
TEA FILTER FOR A COFFEE OR TEA MACHINE
FILTRE A THE POUR MACHINE A PREPARER DU CAFE OU DU THE

(30) Priorität: 06.08.1994 DE 4428013
(43) Veröffentlichungstag der Anmeldung: 21.05.1997
(73) Patentinhaber: Braun Aktiengesellschaft, Frankfurt am Main (DE)
(72) Erfinder: LINK, Karl, D-61352 Bad Homburg (DE); SCHAMBERG, Stefan, D-61250 Usingen (DE); BIRK, Andreas, D-61350 Bad Homburg (DE); WELLER, Albrecht, Dr., D-61449 Steinbach (DE); AMSEL, Klaus, D-61440 Oberursel (DE)
(86) Internationale Anmeldenummer: EP9502791
(87) Internationale Veröffentlichungsnummer: WO9604829

(56) Entgegenhaltungen:
- EP-A- 0 327 822
- WO-A-93/05692
- DE-A- 3 512 920
- GB-A- 2 111 377
- US-A- 5 231 918

## Beschreibung

Die Erfindung betrifft einen Teefilter für eine Kaffee- oder Teemaschine mit einem mit Teeblättern oder Teebeutel (Teegut) füllbaren und von einer Abgabeöffnung mit Heißwasser versorgten Ziehraum, mit einem dem Ziehraum nachgeschalteten Ventil zum Verschließen des Abflusses des aus dem Ziehraum abfließenden Brühgetränks.

Ein derartiger Teefilter ist aus der EP 0 327 822 A1 bekannt. Der bekannte Teefilter hat einen Filterbehälter, der an einer Kaffeemaschine unter einer Abgabeöffnung für Heißwasser und über einer Kanne anbringbar ist. In den Filterbehälter ist ein Teekorb eingesetzt, dessen Boden als Sieb ausgebildet ist. Der Boden des Filterbehälters ist mit einer Ausströmöffnung versehen, die einen Abfluß des Teekorbs bildet und mittels eines Ventils verschließbar ist.

Zum Zubereiten von Tee werden Teeblätter oder dgl. in den Teekorb gefüllt und die Kaffeemaschine wird bei geschlossenem Ventil eingeschaltet. Heißwasser aus dem Druchlauferhitzer der Kaffeemaschine läuft in den Teefilter und zieht dort, d.h. es werden Tee-Extrakte den Teeblättern entzogen. Am Ende der Ziehzeit öffnet ein Benutzer das Ventil und der Tee fließt durch die Ausströmöffnung des Filterbehälters in die darunter befindliche Kanne. Der als Sieb ausgebildete Boden des Teekorbs hält die Teeblätter zurück.

Ein derartiger Teefilter wie im Oberbegriff des Anspruchs 1 beschrieben (vgl. Dokument GB-A-2111377), hat bei der Zubereitung größerer Teemengen den Nachteil, daß die Ziehzeit beendet ist, bevor die gesamte Wassermenge in den Teefilter gelaufen ist. Es läuft weiterhin Heißwasser aus der Kaffeemaschine über die Teeblätter und durch die Ausströmöffnung des Filterbehälters in die Kanne. Die Ziehzeit läßt sich dadurch nicht festlegen, sie hängt von der Brühzeit ab. D.h., es gelangt noch nach Beendigung der Ziehzeit Heißwasser in Kontakt mit den Teeblättern. Dies sollte bei der Teezubereitung vermieden werden, da bei einer langen Kontaktzeit von Wasser mit den Teeblättern zunehmend Gerbstoffe aus den Teeblättern extrahiert werden, die schon in geringen Mengen dazu führen, daß der Tee bitter schmeckt.

Der Erfindung liegt daher die Aufgabe zugrunde, einen gattungsgemäßen Teefilter derart weiterzubilden, daß die Ziehzeit völlig unabhängig von der zubereiteten Teemenge ist, und daß aus der Kaffeemaschine austretendes Heißwasser nach Ende der Ziehzeit nicht mehr mit den Teeblättern in Berührung kommt.

Ausgehend von einem Teefilter der eingangs genannten Art wird diese Aufgabe durch die Merkmale des kennzeichnenden Teils des Anspruchs 1 gelöst.

Die Erfindung hat den Vorteil, daß ein Benutzer auch bei großen Teemengen die Ziehzeit, also die Dauer, während der Heißwasser im Teefilter mit den Teeblättern in Kontakt ist, exakt zu einem von ihm gewünschten Zeitpunkt beenden kann, ohne daß noch weiter Heißwasser über die Teeblätter läuft. Die Zubereitung von Tee mittels des erfindungsgemäßen Teefilters erfolgt nach dem Samowarprinzip, d. h. es wird ein relativ starker Sud hergestellt, der am Ende der Ziehzeit mit heißem Wasser zu Tee verdünnt wird. Eine Kanne für den Tee wird durch eine Warmhalteplatte der Kaffeemaschine vorgewärmt. Eventuell gelangt heißes Wasser bereits während der Ziehzeit am Teekorb vorbei in die Kanne und heizt diese zusätzlich auf. Der erfindungsgemäße Teefilter erlaubt es, Tee mit einer herkömmlichen Kaffeemaschine in beliebiger, nur vom Fassungsvermögen der Kaffeemaschnie begrenzter Menge und mit beliebiger Ziehzeit in bester Qualität herzustellen.

Das Heißwasser aus der Kaffeemaschine kann wahlweise dem Teekorb zur Zubereitung des Suds zugeleitet oder an diesem vorbei direkt in die Kanne geleitet werden, damit das Heißwasser nicht in Kontakt mit den Teeblättern im Teekorb gelangt. Dies kann beispielsweise durch Verschwenken eines Heißwasserrohrs der Kaffeemaschine erfolgen, das eine Abgabeöffnung für das Heißwasser aufweist. Dieses Heißwasserrohr läßt sich so schwenken, daß das Heißwasser entweder in den Teekorb oder in einen Wasserdurchlaß, der am Teekorb vorbeiführt, fließt. Dies kann auch durch Verstellen des Wasserdurchlasses, so daß sich eine Einlaßöffnung des Wasserdurchlasses entweder unter der Heißwasser-Abgabeöffnung der Kaffemaschine oder seitlich von dieser befindet, erfolgen.

Der Teefilter gemäß der Erfindung weist ein Wasserleitrohr als Wasserdurchlaß auf. Dieses erstreckt sich von der Heißwasser-Abgabeöffnung der Kaffeemaschine nach unten zu einer Einfüllöffnung der Kanne. Das Wasserleitrohr kann durch den Teekorb hindurchoder seitlich an ihm vorbei geführt sein. Nach Ende der Ziehzeit leitet das Wasserleitrohr Heißwasser der Kaffeemaschine direkt der Kanne zu und verhindert, daß das Heißwasser in Kontakt mit den Teeblättern im Teekorb gelangt.

Durch die erste Ausgestaltung der Erfindung gemäß den Merkmalen des Patentanspruchs 2 wird ein besonders einfacher Teefilter geschaffen, bei dem mit Hilfe der Wasserleiteinrichtung und einem am Boden ausgebildeten Zulauf in den Ziehraum bereits die Menge an heißem Wasser vorausbestimmt werden kann, die über den Ziehraum und somit über die Teeblätter laufen soll. Bei geschlossenem Ventil fließt nämlich das Brühwasser über den Zulauf in den Ziehraum so lange, bis das Ventil geöffent wird. Anschließend fließt das erhitzte Wasser, das aus dem Brühkopf einer Kaffee- oder Teemaschine gelangt, nur noch über die Wasserleiteinrichtung und das Ventil direkt zu einer unterhalb des Teefilters abgestellten Getränkekanne. Trotz der sehr einfachen, ersten Ausführungsform des Teefilters kann die Kontaktzeit und die Kontaktmenge des Heißwassers mit dem Tee von einer Bedienungsperson bestimmt werden.

Reicht bei größeren Mengen von Tee die Größe des Ziehraums für das aufzunehmende Brühwasser nicht aus, so wird durch die Merkmale des Patentanspruchs 3 ermöglicht, daß nach gefülltem Ziehraum der Überschuß an Teegetränk über den Überlauf direkt in die Getränkekanne abfließt.

Durch die Merkmale des Patentanspruchs 4 wird in vorteilhafter Weise erreicht, daß das zu extrahierende Gut, wie Teeblätter, nicht in das in der Getränkekanne aufgenommene Getränk gelangt.

Nach den Merkmalen des Anspruchs 5 ist vorzugsweise das Wasserleitrohr einstückig mit dem Teekorb ausgebildeet. Dadurch läßt sich der Teekorb mit dem Wasserleitrohr in einem Arbeitsgang einfach, beispielsweise durch Spritzgießen, herstellen. Der Teekorb ist zusammen mit dem Wasserleitrohr in einen Filterbehälter einsetzbar, der seinerseits an der Kaffeemaschine unter deren Heißwasser-Abgabeöffnung und über der Kanne angebracht werden kann. Als Filterbehälter kann ein für die Kaffeemaschine ohnehin vorhandener Kaffeefilterbehälter bzw. Kaffefilter Verwendung finden. Es kann auch ein separater Teefilterbehälter verwendet werden, der vorzugsweise an einer Haltevorrichtung der Kaffeemaschine anstelle des Kaffefilterbehälters angebracht wird. An der Kaffeemaschine müssen dadurch keinerlei Veränderungen vorgenommen werden.

Eine zweite Ausgestaltung der Erfindung weist nach den Merkmalen des Anspruchs 6 ein zweites Ventil auf. Bei geschlossenem zweiten Ventil ist der Wasserdurchlaß gesperrt und das Heißwasser fließt aus der Kaffeemaschine in den Teekorb. Bei geöffnetem zweiten Ventil fließt das Heißwasser aus dem Brühkopf der Kaffeemaschine, über die Wasserleiteinrichtung am Teekorb vorbei, direkt in die Kanne. Beim Aufgießen der Teeblätter mit Brühwasser muß hierbei das zweite Ventil geschlossen sein, so daß, sobald die Wasserleiteinrichtung mit Brühwasser gefüllt ist, dieses über den Überlauf der Wasserleiteinrichtung aus dieser austritt und in den mit Teeblättern versehenen Ziehraum gelangt. Sobald das Ende der Ziehzeit erreicht ist, und weiterhin Brühwasser in den Teefilter einfließt, werden beide Ventile geöffnet und es kann einerseits das Teegetränk über die Ventilanordnung und den Auslaß in die Getränkekanne und andererseits das noch in den Teefilter einfließende Brühwasser direkt über die Wasserleiteinrichtung, also vorbei am Ziehraum, in die Getränkekanne abfließen. Durch das zweite Ventil wird also die Wasserleiteinrichtung verschlossen, während durch das erste Ventil der Ablauf des Ziehraums gesperrt wird. Diese zweite Ausführungsform eines Teefilters nach der Erfindung ermöglicht ein Einfließen des Brühwassers von oben her in den Ziehraum, während dies hingegen bei der ersten Ausführungsform des Teefilters von unten her erfolgt.

In bevorzugter Ausgestaltung der Erfindung sind nach den Merkmalen des Anspruchs 7 beide Ventile gemeinsam betätigbar. Zum Ziehenlassen des Tees sind beide Ventile geschlossen, so daß aus der Kaffeemaschine auströmendes Heißwasser in den Teekorb fließt und dort verbleibt. Am Ende der Ziehzeit werden beide Ventile gemeinsam geöffnet, wodurch der zubereitete Sud bzw. das aromareiche und starke, aber weniger bittere Teegetränk durch den Abfluß des Teekorbs in die Kanne fließt. Dabei fließt auch aus der Kaffeemaschine ausströmendes Heißwasser über die Wasserleiteinrichtung zu dem Abfluß direkt in die Kanne und "verdünnt" den Sud am Abfluß zu einem wohlschmeckenden Teegetränk. Das Heißwasser aus der Kaffeemaschine kommt nach Ende der Ziehzeit also nicht mehr mit den Teeblättern im Teekorb in Kontakt. Die gemeinsame Betätigung beider Ventile des erfindungsgemäßen Teefilters vereinfacht dessen Bedienung, da zur Teezubereitung vor dem Einschalten der Kaffeemaschine lediglich nur mit einem einzigen Handgriff beide Ventile geschlossen werden - wenn sie zuvor noch geöffnet waren - und da zum Beenden der Ziehzeit ebenfalls nur mit einem einzigen Handgriff nur ein die beiden Ventile steuerndes Bedienelement betätigt werden muß.

Durch die Merkmale des Patentanspruchs 8 wird nur ein Abfluß benötigt, wenn die beiden Ventile hintereinander angeordnet sind. Hierdurch wird der Abfluß des Teefilters mit seiner Ventilanordnung besonders einfach und läßt sich leicht und preisgünstig herstellen, wenn der Teefilter als Kunststofformteil aus einem Spritzwerkzeug ausgeformt wird.

Das untere Ende des Wasserleitrohrs bildet bei der zweiten Ausgestaltung der Erfindung nach Anspruch 9 einen Doppelventilkörper für beide Ventile. Diese einteilige Ventilanordnung, die einerseits vom Wasserleitrohr und andererseits vom Boden des Teefilters gebildet wird, führt zu einer einfachen und kostengünstigen Ausbildung der zweiten Ausführungsform der Ventilanordnung. Während das erste Ventil den Ablauf des Brühgetränks aus dem Ziehraum verhindert, verhindert das zweite Ventil den Ablauf des Heißwassers aus dem Wasserleitrohr. Erst bei geöffneten Ventilen fließt sowohl das Wasser aus dem Ziehraum wie aus der Wasserleiteinrichtung zum Abfluß und von dort in die Getränkekanne.

Durch die Merkmale des Patentanspruchs 10 läßt sich auch diese Ventilanordnung und somit sowohl die mit dem Ziehraum verbundene Wasserleiteinrichtung wie das Gehäuse des Teefilters als getrennte Formspritzteile herstellen, ohne daß nachträglich mechanische Bearbeitungsvorgänge erforderlich wären.

Durch die Merkmale des Patentanspruchs 11 ergibt sich eine besonders einfache, zweite Ausführungsform nach der Erfindung. Hierbei bildet das freie Ende des Wasserleitrohres mit der am Boden des Teefilters ausgebildeten Wandung der Auslaßöffnung die Doppelventilanordnung.

Gemäß den Merkmalen des Patentanspruchs 12 ergibt sich für die zweite Ausführungsform eine besonders einfache Ventilbetätigung beider Ventile, in dem zwischen dem Teekorb und dem Filterbehälter eine als Exzenterbetätigung ausgebildete Hubvorrichtung angeordnet ist.

Eine dritte Ausführungsform der Erfindung mit einer Doppelventilanordnung ergibt sich durch die Merkmale des Patentanspruchs 13. Bei dieser Ventilanordnung wird nur eine einzige Dichtung benötigt, die mit der am freien Ende des Wasserleitrohrs und am Stopfen ausgebildeten Dichtfläche das erste und zweite Ventil bildet.

Um dabei eine einfache Ventilbetätigung zu ermöglichen, sind die Merkmale des Patentanspruchs 14 vorgesehen. Dadurch, daß am Stopfen ein den Auslaß nach unten durchdringender Fortsatz ausgebildet ist, kann die Ventilanordnung des Teefilters von unten her, also von der Auslaßseite, betätigt werden.

Der Ziehraum des Teefilters sollte klein im Verhältnis zum Volumen üblicher Kaffeefilter sein, damit auch bei geringen Teemengen das Heißwasser während des Ziehens die Teeblätter im Teekorb vollkommen umschließt und damit der Ziehraum sich möglichst schnell mit Wasser füllt (Anspruch 15). Dies kann beispielsweise durch Abtrennen des Ziehraums mittels Trennwänden im Filterbehälter erfolgen.

Der erfindungsgemäße Teefilter (Anspruch 16) weist vorzugsweise einen Überlauf auf, durch den Heißwasser aus dem Ziehraum des Teefilters in die Kanne ablaufen kann, wenn der Ziehraum des Teefilters bereits während der Ziehzeit mit Heißwasser gefüllt ist und weiterhin Heißwasser aus der Kaffeemaschine ausströmt. Eine durch das Volumen des Ziehraums vorgegebene Heißwassermenge extrahiert Wirkstoffe aus den Teeblättern und bildet den Sud, während weiteres Heißwasser aus der Kaffeemaschine in die Kanne fließt und diese vorwärmt. Am Ende der Ziehzeit wird der Sud aus dem Ziehraum in die Kanne abgelassen und vermischt sich dort mit dem Heißwasser zu Tee.

In bevorzugter Ausgestaltung nach den Merkmalen des Anspruch 18 ist ein Einlaß des Überlaufs mit einer Rückhalteeinrichtung für die Teeblätter versehen. Dies kann beispielsweise durch Ausbildung des Einlasses als Sieb mit Durchgangslöchern oder als Gitter mit Schlitzen erfolgen.

Die Erfindung wird im folgenden anhand einer in der Zeichnung dargestellten Ausführungsform näher erläutert. Es zeigen:
- Fig. 1: einen Schnitt durch einen erfindungsgemäßen Teefilter eines ersten Ausführungsbeispiels mti nur einem Ventil,
- Fig. 2: die Draufsicht auf den Teefilter aus Figur 1,
- Fig. 3: Teillängsschnitt durch ein zweites Ausführungsbeispiel eines Teefilters nach der Erfindung mit einem Doppelventil,
- Fig. 4: Draufsicht auf den Teefilter nach Fig. 3 und
- Fig. 5: Teillängsschnitt durch eine dritte Ausführungsform eines Teefilters im Bereich der Doppelventilanordnung.

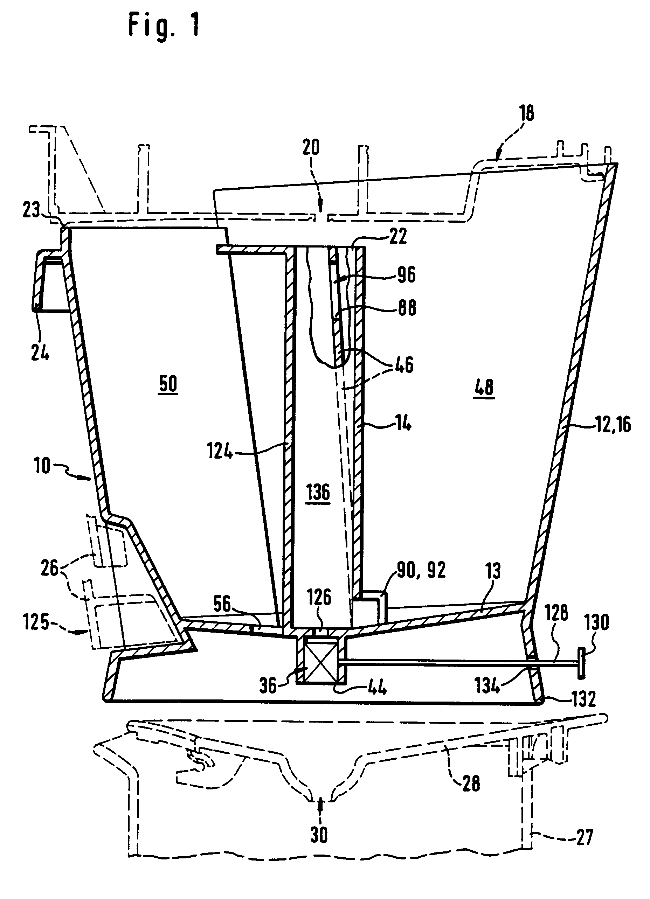

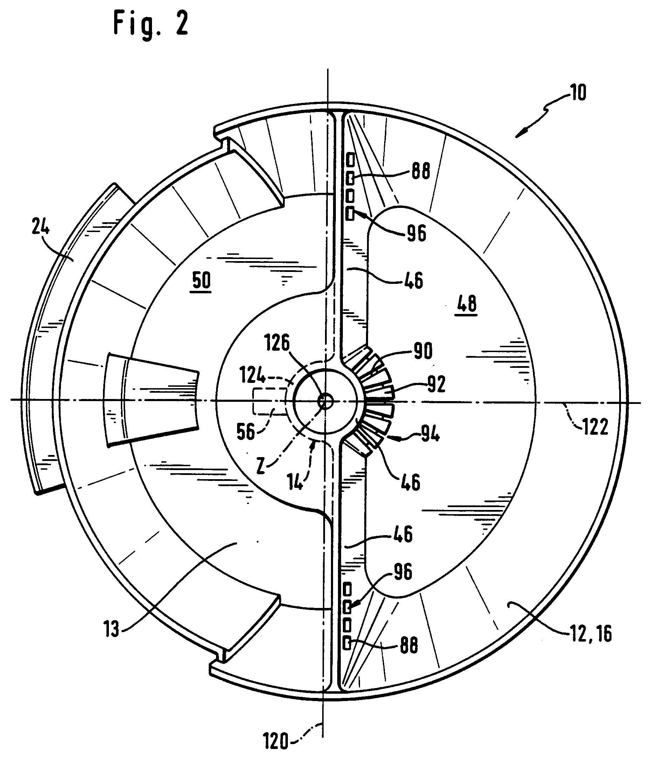

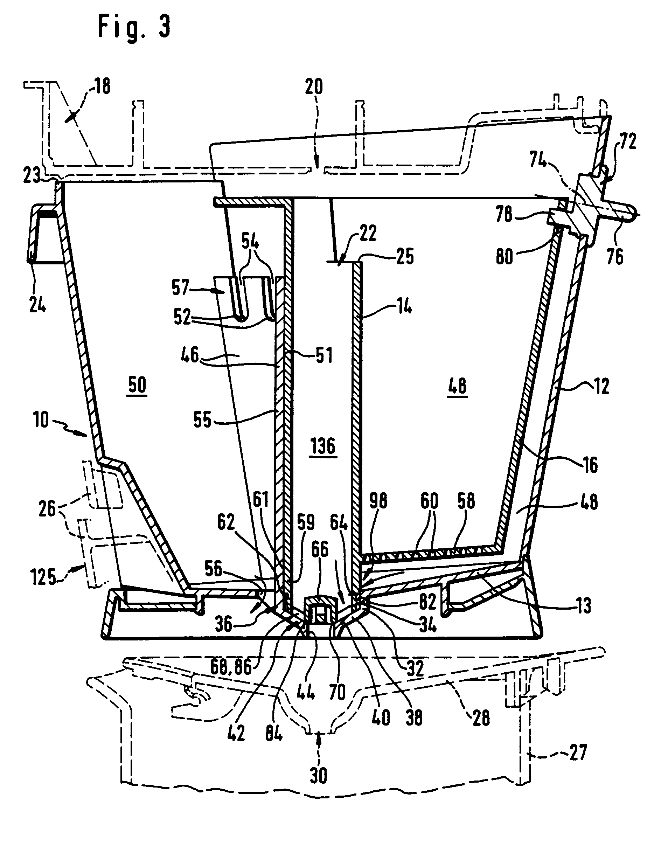

Der in den Figuren 1 bis 5 dargestellte erfindungsgemäße Teefilter 10 dient zum Zubereiten von Tee mit Hilfe einer herkömmlichen Kaffeemaschine, von der aber in Figur 1 und 3 andeutungsweise nur der Brühkopf 18 dargestellt ist. Der Teefilter 10 umfaßt einen Filterbehälter 12, in den ein mit einem Wasserleitrohr 14 einstückiger Teekorb 16 eingesetzt ist. Die Teile 12, 14, 16 des Teefilters 10 sind vorzugsweise aus Kunststoff gespritzt.

Über dem Teefilter 10 ist nach den Figuren 1 und 3 mit Strichlinien ein Teil des Brühkopfs 18 einer im übrigen nicht näher dargestellten Kaffeemaschine angedeutet. Eine am Brühkopf 18 ausgebildete Heißwasser-Abgabeöffnung 20 befindet sich über der oberen Öffnung 22 des Wasserleitrohrs 14. Aus der Abgabeöffnung 20 tritt durch einen Durchlauferhitzer (nicht dargestellt) erhitztes Wasser in den Teefilter 10 ein. Der Durchlauferhitzer ist mit einem Wassertank (nicht dargestellt) der Kaffee- oder Teemaschine verbunden.

Der Filterbehälter 12 kann zum Einhängen anstelle eines Kaffeefilters in die Kaffeemaschine vorgesehen sein; bei Verwendung als reine Teemaschine entfällt dann der Kaffeefilter. Der Teefilter 10 weist zu diesem Zweck in einem Umfangsbereich seines oberen Randes 23 eine nach unten stehende, bogenförmige Haltelasche 24 auf zum Einhängen in eine komplementäre, nicht dargestellte Halterung der Kaffeemaschine, die ansonsten zum Einhängen eines Kaffeefilters (nicht dargestellt) dient.

Der Filterbehälter 12 hat hier die Form eines dünnwandigen, sich etwas nach oben erweiternden Kegelstumpfs. Er ist oben offen, seine Unterseite ist mit einem Boden 13 versehen. Andere Formen für den Teefilter 10 sind selbstverständlich auch möglich. Im unteren Bereich, unterhalb der Haltelasche 24 liegt der Filterbehälter 12 an mit Strichlinien in Figur 1 und 3 angedeuteten Anlagen 26 des Gehäuses 125 (nur angedeutet) der Kaffeemaschine an.

Unter dem Teefiltern 10 ist nach den Figuren 1 und 3 eine Kanne 27 (gestrichelt teilweise dargestellt) auf eine Warmhalteplatte (nicht dargestellt) der Kaffeemaschine gestellt, deren Deckel 28 in Figur 1 und 3 mit Strichlinien angedeutet ist. Der Deckel 28 ist als flacher Trichter mit einer Einströmöffnung 30 in seiner Mitte ausgebildet.

In den Figuren 1 und 2 besteht der Teefilter 10 weiterhin aus einem im wesentlichen kegelstumpfförmig verlaufenden Filtergehäuse 12, das über seine Mitte durch eine Trennwand 46 getrennt ist, so daß rechts von der senkrechten Mittellinie 120 ein im Querschnitt im wesentlichen halbkreisförmiger Ziehraum 48 entsteht. Der Ziehraum 48 kann aber auch als einzelnes Bauteil in den Filterbehälter 12 einsetzbar sein. Die Oberkante der Trennwand 46 weist zu beiden Seiten der horizontalen Mittellinie 122 (Figur 2) ein oder mehrere Überlaufkanten 88 auf, an die sich gemäß Figur 1 nach oben ein Sieb 96 anschließt. Das Sieb 96 wird von Schlitzen gebildet, die bis zur Überlaufkante 88 verlaufen. Die Überlaufkante 88 ist in einer derartigen Höhe am Ziehraum 48 angebracht, so daß das Volumen des Ziehraums 48 ausreichend groß ist, damit Teeblätter und ausreichend Heißwasser für den Extraktionsvorgang im Ziehraum 48 eingebracht werden können.

Nach den Figuren 1 und 2 erstreckt sich im Zentrum Z vom Boden 13 bis oberhalb der Überlaufkante 88 ein Wasserleitrohr 14, das einerseits von der Trennwand 46 und andererseits von einer sich an die Trennwand anschließenden, im wesentlichen halbkreisförmigen Wand 124 gebildet wird. Die Wasserleiteinrichtung 14 besteht somit aus einem im Querschnitt kreisförmigen Rohr, das durch den Boden 13 am unteren Ende verschlossen und am oberen Ende durch die obere Öffnung 22 nach oben hin zur Heißwasser-Abgabeöffnung 20 offen ist. Innerhalb des Rohres 14 weist dieses am Boden 13 eine Öffnung 126 auf, die durch ein erstes Ventil 36 verschiebbar ist. Das erste Ventil 36 ist über eine Betätigungsstange 128, an der ein Handgriff 130 ausgebildet ist, von außen betätigbar. Dabei durchdringt die Betätigungsstange 128 eine am Stellfuß 132 des Teefilters 12 angebrachte Bohrung 134. Am Übergang vom Boden 13 zum Wasserleitrohr 14 ist eine Strömungsmittelverbindung 90 in Form eines Durchlasses ausgebildet, der ausschließlich nur in den Ziehraum 48 mündet. Die Strömungsmittelverbindung 90 weist einzelne Rippen 92 auf, so daß sich hierdurch ein die Teeblätter zurückhaltendes Sieb 94 ergibt.

Die Wirkungsweise des erfindungsgemäßen Teefilters nach den Figuren 1 und 2 ist folgende:

Nachdem in den Ziehraum 48 Teeblätter eingegeben wurden und gleichzeitig das Ventil 36 verschlossen ist, kann die Tee- oder Kaffeemaschine eingeschaltet werden. Sobald im Durchlauferhitzer (nicht dargestellt) Wasser erhitzt wurde, wird dies über eine Steigleitung (nicht dargestellt) der Heißwasser-Abgabeöffnung 20 zugeführt, von wo es in die Wasserleiteinrichtung 14 einfließt. Da das erste Ventil 36 verschlossen ist, steigt das Heißwasser in dem Wasserleitrohr 14 an und strömt über die Strömungsmittelverbindung 90 in den Ziehraum 48 hinein, wo es mit den Teeblättern in Kontakt gelangt. Der Extraktionsvorgang beginnt, indem das heiße Wasser den Teeblättern Teein und sonstige Aromastoffe entzieht. So lange Heißwasser in die Wasserleiteinrichtung 14 einfließt, steigt sowohl in dieser wie im Ziehraum 48 der Wasserpegel gleichmäßig. Sobald der Pegel die Überlaufkante 88 erreicht hat, fließt über diesen das Teegetränk in den neben dem Ziehraum angeordneten Überlaufraum 50, von wo es über den Ablauf 56 in die am Deckel 28 ausgebildete Einströmöffnung 30 gelangt und von dort in die darunter abgestellte Kanne 27 einfließt.

Ist die für eine Bedienungsperson erforderlich Ziehzeit beendet, so wird über den Handgriff 130 die Betätigungsstange 128 derart verdreht, daß das erste Ventil 36 geöffnet wird. Nunmehr fließt über die Ausflauföffnung 126, das geöffnete erste Ventil 36 die in der Wasserleiteinrichtung 14 und im Ziehraum 48 anstehende Flüssigkeit über den Abfluß 44 ab und strömt über die Einströmöffnung 30 in die Kanne 27 ein. Dabei vermischt sich das aus der Strömungsmittelverbindung 90 aus dem Ziehraum 48 austretende Teegetränk mit dem im Ringraum 136 anstehenden Heißwasser. Solange noch Heißwasser aus der Heißwasserabgabeöffnung 20 in die obere Öffnung 22 des Wasserleitrohr 14 einfließt, wird dieses mit den im Ziehraum 48 befindlichen Teeblättern nicht mehr kontaktiert, da es direkt über die Auslauföffnung 126 zum Abfluß 44 gelangt, allerdings dies erst dann, wenn das Teegetränk aus dem Ziehraum 48 und das Heißwasser aus dem Ringraum 136 vollständig abgelaufen ist. Durch diese Anordnung wird erreicht, daß nach Öffnen des ersten Ventils 36 nach einer vorgegebenen Ziehzeit noch nachfließendes Heißwasser nicht mehr mit den Teeblättern in Kontakt gerät, wodurch eine weitere Extraktion und somit der Bitterstoffanteil im Teegetränk in Grenzen gehalten werden kann. Durch diese Anordnung kann also von einer Bedienungsperson der Geschmack, das Aroma und der Teeingehalt während des Brühvorgangs festgelegt werden. Die Erfindung wird also in dem ersten Ausführungsbeispiel mit lediglich einem einzigen Ventil 36, einer Wasserleiteinrichtung 14 und einem am Boden von der Wasserleiteinrichtung 14 in den Ziehraum 48 ausgebildeten Strömungsmittelverbindung 90 erreicht.

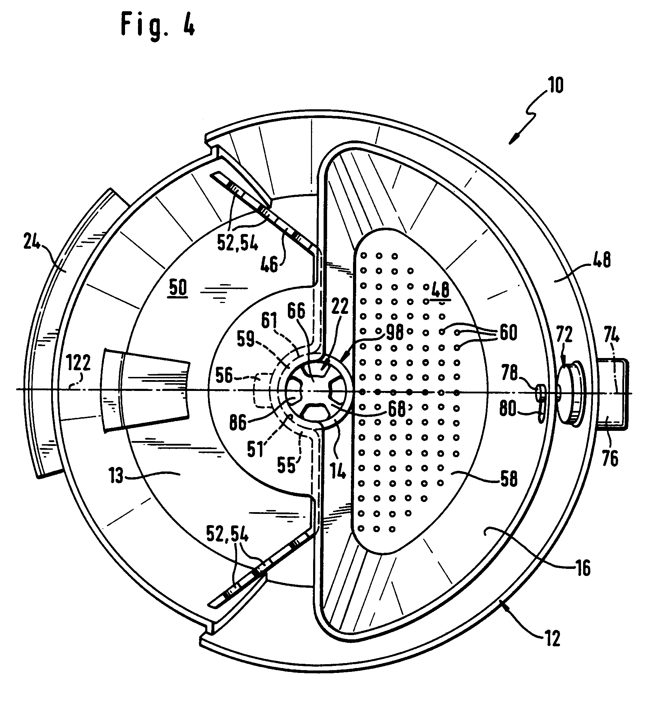

In den Figuren 3 und 4 ist ein zweites Ausführungsbeispiel der Erfindung dargestellt, das sich im wesentlichen durch eine Doppelventilanordnung, bestehend aus zwei Ventilen 36, 42 am Ende der Wasserleiteinrichtung 14. Im Zentrum des Bodens 13 des Filterbehälters 12 befindet sich nach denFiguren 3 und 4 ein kurzer, sich nach unten erstreckender Hohlzylinderabschnitt 32, dessen Innenfläche als Ventilsitz 34 eines Ventils 36 dient. An seiner Unterseite geht der Hohlzylinderabschnitt 32 nach unten in einen Hohlkegel 38 über, dessen Innenkegelfläche einen Ventilsitz 40 für ein weiteres Ventil 42 bildet. Eine Durchgangsbohrung anstelle einer Spitze des Hohlkegels 38 bildet einen Auslaß aus dem Filterbehälter 12.

Eine im wesentlichen vertikal verlaufende Trennwand 46 teilt nach Figuren 3 und 4 das Innere des Filterbehälters 12 in einen Ziehraum 48, in den der Teekorb 16 eingesetzt ist, und in einen Überlaufbereich 50, der neben dem Ziehraum 48 als getrennter Raum im Teefilter 10 ausgebildet ist. Der Ziehraum 48 nimmt in etwa die halbe Grundfläche des Filterbehälters 12 ein. Der obere Rand der Trennwand 46 bildet zu beiden Seiten der horizontal verlaufenden Mittelachse 74 (Fig. 4) ein Sieb 57 für den Ziehraum 48. Das Sieb 57 ist mit senkrecht verlaufenden Schlitzen 54 versehen, die ein Überlaufgitter bilden und deren untere Kanten die Überlaufkanten 52 bilden. Das Wasserleitrohr 14 weist an der oberen Öffnung 22 eine weitere Überlaufkante 25 auf, die oberhalb der unteren Überlaufkante 52 des Siebs 57 liegt.

Im Boden 13 des Filterbehälters 12 befindet sich ein Ablauf 56 aus dem Überlaufbereich 50 nahe dem Zentrum des Filterbehälters 12 unmittelbar an der Trennwand 46. Der Ablauf 56 befindet sich oberhalb des als Trichter wirkenden Deckels 28 in Nähe der Einströmöffnung 30 des Deckels 28.

In ihrer Mitte ist nach den Figuren 3 und 4 die Trennwand 46 von oben bis unten über einen Abschnitt 55 halbrund in Richtung des Überlaufbereichs 50 ausgebogen. Dieser Halbrundbereich bildet eine Führungsfläche 51 für das Wasserleitrohr 14 und somit für den Teekorb 16. Der in den Filterbehälter 12 eingesetzte Teekorb 16 hat eine halbkreisförmige Grundfläche; er bildet mit dem rechten Teil des Filterbehälters 12 gemeinsam den Ziehraum 48. Sein Boden 58 ist als Sieb mit einer Vielzahl von Durchgangslöchern 60 versehen. Das mit dem Teekorb 16 einstückige Wasserleitrohr 14 weist in seinem unteren Abschnitt 59 ebenfalls eine Führungsfläche 61 auf, die an der Führungsfläche 51 der Trennwand 46 gleich verlaufend anliegt. Die Führungsfläche 61 ist mitsamt dem Teekorb 16 in vertikaler Richtung verschiebbar. Der Hohlzylinderabschnitt 32 im Boden 13 des Filterbehälters 12 gibt dem unteren Ende des Wasserleitrohrs 14 und somit dem Teekorb 16 ebenfalls eine Führung.

Der Teekorb 16 mit dem Wasserleitrohr 14 ist, wie bereits oben erwähnt, im Filterbehälter 12 anheb- und absenkbar, wie später noch näher beschrieben wird. In der Zeichnung nach Figur 3 ist die abgesenkte Stellung des Teekorbs 16 dargestellt.

Das untere Ende des Wasserleitrohrs 14 ist nach Figur 3 und 4 als Doppelventilkörper mit einem ersten 36 und zweiten 42 Ventil ausgebildet. Die Außenumfangsfläche des unteren Endes des Wasserleitrohrs 14 ragt bei abgesenktem Wasserleitrohr 14 in den Hohlzylinderabschnitt 32 und verschließt dadurch den Auslaß 44 am Boden 13 des Filterbehälters 12, der einen Abfluß des Teekorbs 16 bzw. Ziehraums 48 bildet. Zum Abdichten ist eine Ringdichtung 62 in eine umlaufende Dichtungsnut 64 in der Außenfläche am unteren Ende des Wasserleitrohrs 14 eingesetzt. Bei angehobenem Wasserleitrohr 14 ist der Auslaß 44 für Flüssigkeit aus dem Ziehraum 48 bzw. dem Teekorb 16 offen.

Im Zentrum des unteren Endes des Wasserleitrohrs 14 ist nach den Figuren 3 und 4 eine Kappe 66 mit ihrer geschlossenen Seite nach oben angeordnet. Diese Kappe 66 bildet den Ventilkörper des zweiten Ventils 42. Sie ist einstückig über Rippen 68 mit dem Wasserleitrohr 14 verbunden. Ihr unterer Umfangsrand 70 sitzt bei abgesenktem Wasserleitrohr 14 dichtend auf dem Ventilsitz 40 des zweiten Ventils 42 auf, so daß keine Flüssigkeit durch den Auslaß 44 am Boden 13 des Filterbehälters 12 aus dem Wasserleitrohr 14 ablaufen kann. Bei angehobenem Wasserleitrohr 14 ist der Auslaß 44 für Flüssigkeit aus dem Wasserleitrohr 14 offen.

Im oberen Bereich ist an einer Umfangsstelle von Teefilter 10 und Teekorb 16 eine Hubvorrichtung 72 mit einem Exzenterzapfen 78 drehbar im Filterbehälter 12 gelagert. Die Drehachse 74 des Exzenterzapfens 78 ist gering gegenüber der Horizontalen geneigt. Die Hubvorrichtung 72 weist einen vom Filterbehälter 12 nach außen stehenden Betätigungsgriff 76 auf. Der Exzenterzapfen 78 greift in einen im wesentlichen horizontal verlaufenden Schlitz 80 des Teekorbs 16 ein. Durch Drehen der Hubvorrichtung 72 um eine Vierteldrehung kann der Teekorb 16 zusammen mit dem Wasserleitrohr 14 angehoben und abgesenkt werden, wodurch die beiden Ventile 36, 42 gemeinsam geöffnet und geschlossen werden.

Die Teezubereitung mittels des erfindungsgemäßen Teefilters 10 nach der zweiten Ausführungsform der Erfindung gemäß den Figuren 3 und 4 in Verbindung mit einer herkömmlichen Kaffeemaschine 18 geschieht wie folgt:

Teeblätter oder dgl. werden in den Teekorb 16 gefüllt. Die beiden Ventile 36, 42 werden durch Absenken des Teekorbs 16 über die Hubvorrichtung 72 zusammen mit dem Wasserleitrohr 14 geschlossen. Nach Einschalten der Kaffeemaschine 18 fließt Heißwasser aus der Heißwasser-Abgabeöffnung 20 der Kaffeemaschine 18 in das Wasserleitrohr 14. Da das zweite Ventil 42 das Wasserleitrohr 14 an seiner Unterseite verschlossen hat, staut sich das Heißwasser im Wasserleitrohr 14 und läuft, sobald der Ringraum 136 gefüllt ist, an dessen Oberseite in den Ziehraum 48 des Teekorbs 16 über.

Dabei werden die im Ziehraum 48 befindlichen Teeblätter (nicht dargestellt) durchgewirbelt, was zu einer besseren Extraktion der Teeblätter gegenüber dem ersten Ausführungsbeispiel nach den Figuren 1 und 2. Da das erste Ventil 36 den Abfluß für Flüssigkeit aus dem Ziehraum 48 verschließt und gleichzeitig das zweite Ventil 42 den Auslaß 44 verschließt, kann das Heißwasser nicht abfließen und steigt dadurch im Ziehraum 48 und gleichzeitig im Ringraum 136 an und bildet dort einen Sud.

Zum Beendigen des Ziehvorgangs nach einer vorgegebenen Zeit wird der Exzenter 72 von einer Bedienungsperson verdreht und dadurch der Teekorb 16 mit dem Wasserleitrohr 14 angehoben. Die beiden Ventile 36, 42 sind geöffnet. Der Sud läuft aus dem Ziehraum 48 durch den Auslaß 44 im Boden 13 des Filterbehälters 12 in die unter dem Teefilter 10 abgestellte Kanne 27 ab. Sollte aus der Abgabeöffnung 20 der Kaffeemaschine 18 weiterhin Heißwasser ausströmen, so fließt dieses Wasser direkt über das Wasserleitrohr 14, das geöffnete zweite Ventil 42 und den Auslaß 44 in die Kanne 27, ohne daß dabei das Heißwasser mit den im Teekorb 16 befindlichen Teeblättern in Kontakt gerät, wodurch der Geschmack des Tees unabhängig von der Heißwassermenge von einer Bedienungsperson selbst bestimmt werden kann.

Falls der Flüssigkeitsspiegel im Ziehraum 48 während der Heißwasserförderung die Überlaufkante 52 der Trennwand 46 im Filterbehälter 12 übersteigt, läuft die Flüssigkeit über diese Kante 52 in den Überlaufbereich 50 des Filterbehälters 12 über und von dort durch dessen Ablauf 56 in die Kanne ab. Die das Rückhaltegitter bildenden Schlitze 54 im oberen Rand der Trennwand 46 halten auf der Flüssigkeit schwimmende Teeblätter im Ziehraum 48 zurück, damit sie nicht in die Kanne gelangen.

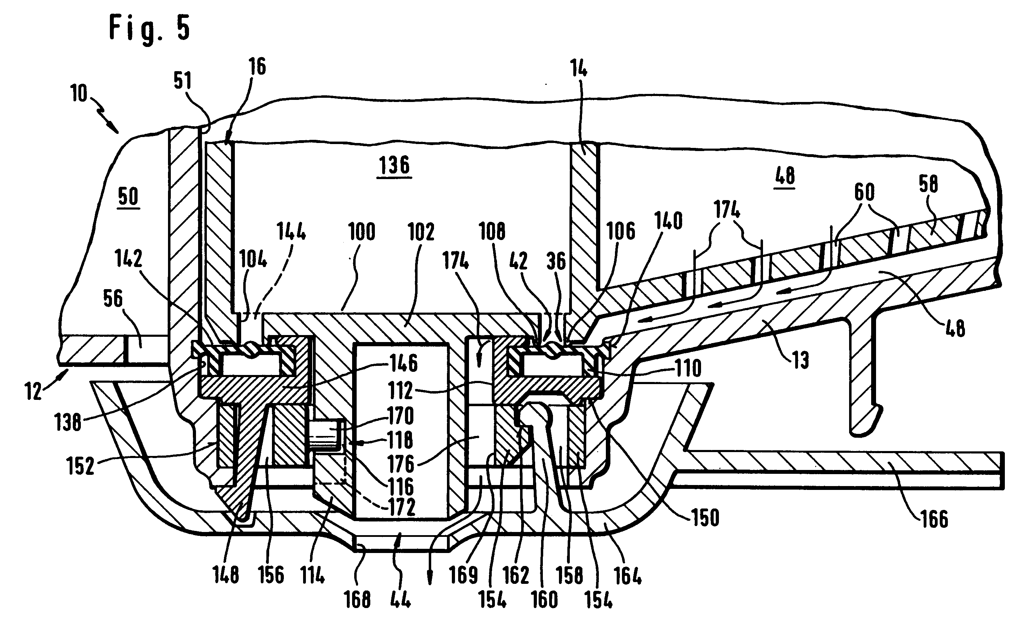

Aus Figur 5 ist eine dritte Ausführungsform eines Teefilters 10 dargestellt, bei dem, wie in den Figuren 3 und 4 die Ventilanordnung aus einer Doppelventilanordnung mit einem ersten und zweiten Ventil 36, 42 besteht, wobei allerdings die Ventilanordnung mit ihrer Hubvorrichtung 72 unterschiedlich gegenüber der zweiten Ausführungsform nach den Figuren 3 und 4 ausgebildet ist. Dabei besteht das erste und zweite Ventil 36, 42 aus einer gemeinsamen, im Querschnitt U-förmigen Ringdichtung 110, die in einer in der Öffnung 138 des Auslasses 44 ausgebildeten Ringnut 140 befestigt ist. Die nach oben zeigende Dichtfläche dient als Abdichtung für die Dichtfläche 106 des ersten Ventils 36 und die Dichtfläche 108 des zweiten Ventils 42. Die erste Dichtfläche 106 wird von dem freien Ende des Wasserleitrohrs 14 gebildet, während die zweite Dichtfläche 108 von einem Stopfen 102 gebildet wird, der im unteren Ende des Wasserleitrohrs 14 ausgebildet ist und über Stege 144 (gestrichelt dargestellt) einteilig mit dem Wasserleitrohr 14 verbunden ist. Zwischen den Stegen 144 und zwischen den beiden Dichtflächen 106 und 108 sind am Stopfen 102 Ablauföffnungen 104 ausgebildet, die eine Strömungsmittelverbindung vom Ringraum 136 des Wasserleitrohrs 14 zum zweiten Ventil 42 herstellen.

Nach Figur 5 ist der Dichtring 110 in einem Haltering 146 zentriert, wobei der Haltering 146 an der Führungsfläche 51 seinerseits geführt wird. Der Haltering 146 weist nach unten gerichtete Haken 148 auf, die das freie Ende des Auslasses 44 am Boden 13 des Filterbehälters 12 hintergreifen. Dabei stützt sich der Haltering 146 an einer am Auslaß 44 angeordneten Stufe 150 ab und wird somit in dieser Lage fixiert. Radial außerhalb der Haken weist die Auslaßbohrung 44 noch eine Stufenbohrung 152 auf, in die ein Ring 154 eingreift. Der Ring 154 weist am Umfang verteilte Durchgänge 156 auf, von denen einige von den Haken 148 durchdrungen werden. Versetzt zu diesen Durchgängen 156 sind am Ring 154 weitere Durchgänge 158 ausgebildet, die von Haken 160 von unten her durchdrungen werden und die am Durchgang 158 ausgebildete Absätze 162 federnd hintergreifen. Auf diese Weise wird das tellerförmig ausgebildete Stellglied 164, das mit einem radial nach außen herausragenden Hebel 166 verbunden ist, drehfest mit dem Ring 154 verbunden. Der Ring 154 ist allerdings zusammen mit dem Stellglied 164 über den Hebel 166 drehbar am freien Ende des am Boden 13 ausgebildeten Auslaufs 44 des Filterbehälters 12 verbunden. Das Stellglied 164 weist eine konzentrisch zur Öffnung 112 verlaufende Bohrung 168 auf, die die Verlängerung des Auslasses 44 bildet.

Nach Figur 5 steht weiterhin an der Innenwandung 169 des Ringes 154 ein Zapfen 170 hervor, der in eine am Fortsatz 114 ausgebildete Kulisse 116 eingreift. Die Kulisse 116 verläuft am Umfangsrand des Fortsatzes 114 derart nach oben, wie dies durch die gestrichelte Linie 172 angezeigt wird, daß beim Drehen des Ringes 154 durch das Stellglied 164 der Fortsatz 114 und somit der gesamte Teekorb 16 nach oben angehoben wird.

Die Wirkungsweise des erfindungsgemäßen Teefilters 10 nach Figur 5 ist folgende:

Sind die beiden Ventile 36, 42 geschlossen, so kann, wenn im Ziehraum 48 Teeblätter eingegeben wurden, der Brühvorgang beginnen, inden gemäß Figur 3 über die Heißwasser-Abgabeöffnung 20 Heißwasser in das Wasserleitrohr 14 einfließt. Sobald der Ringraum 136 bis zum Überlauf 25 gefüllt ist, läuft Brühwasser in den Ziehraum 48 hinein und extrahiert die Teeblätter, wie bereits oben zu Figur 3 beschrieben. Soll nun keine Kontaktierung des Heißwassers mit den Teeblättern mehr erfolgen, so wird der Hebel 166 der als Rampenanordnung ausgebildeten Hubeinrichtung 118 verdreht, so daß hierdurch über das Stellglied 164 der Ring 154 und somit der Zapfen 170 verdreht wird. Da der Teekorb 16 und somit der Fortsatz 114 drehfest im Filterbehälter 12 angeordnet sind, ergibt sich durch die Drehbewegung eine axiale Verschiebung des Teekorbs 16 gemäß Figur 5 nach oben. Hierdurch heben sich die beiden Dichtflächen 106, 108 des ersten und zweiten Ventils 36, 42 von der Dichtfläche 142 der Dichtung 110 ab, so daß einerseits der Sud über die Durchgangslöcher 60 gemäß der Pfeilführung 174 am Boden 13 entlang geführt, am ersten und zweiten Ventil 36, 42 vorbei, in den zwischen dem Fortsatz 114 und der Innenwandung 169 gebildeten Ringraum 176 geleitet wird, von wo er über die von der Innenwandung 168 gebildeten Bohrung nach außen gelangt. Gleichzeitig fließt das im Ringraum 136 befindliche Heißwasser über die Ablauföffnung 104, das zweite Ventil 42 und ebenfalls in den Ringraum 176. An der Stelle zwischen dem ersten Ventil 36 und der Ablauföffnung 104 vermischt sich der aus dem Ziehraum 48 abfließende Sund mit dem in dem Ringraum 136 des Wasserleitrohrs 14 befindlichen Heißwassers. Fließt nun weiter Heißwasser über die Heißwasser-Abgabeöffnung 20 in den Ringraum 136 ein, so wird dieser dem Auslaß 44 zugeführt, ohne daß er mit den im Ziehraum 48 befindlichen Teeblättern kontaktiert wird. Auch dann, wenn bereits der sich in dem Ziehraum 48 befindliche Sud über den Abfluß 44 abgelaufen wird und weiterhin noch Heißwasser in das Wasserleitrohr 14 eingeleitet wird, fließt letzteres nunmehr nur noch aus dem Abfluß 44 in die Kanne 27 (Figur 3).

## Patentansprüche

1. Teefilter (10) für eine Kaffee- oder Teemaschine mit einem mit Teeblättern oder Teebeutel (Teegut) füllbaren und von einer Abgabeöffnung (20) mit Heißwasser versorgten Ziehraum (48) mit einem dem Ziehraum (48) nachgeschalteten Ventil (36) zum Verschließen des Abflusses (44) des aus dem Ziehraum (48) abfließenden Brühgetränks, wobei im Teefilter (10) eine Wasserleiteinrichtung (14) vorgesehen ist, mittels derer von der Kaffee- oder Teemaschine (18) kommendes Heißwasser bei geschlossenem Ventil (36) wahlweise dem Ziehraum (48) zuleitbar oder bei geöffnetem Ventil (36) über die Wasserleiteinrichtung (14) am Ziehraum (48) vorbei in ein Gefäß (27) leitbar ist,
**dadurch gekennzeichnet**,
daß die Wasserleiteinrichtung (14) aus einem unterhalb der Heißwasser-Abgabeöffnung (20) angeordneten und sich nach unten bis zum Abfluß (44) erstreckenden Wasserleitrohr (14) besteht, daß in das Wasserleitrohr (14) das ganze Brühwasser einfließt und daß das Wasserleitrohr (14) eine Verbindung (90, 22) zum Ziehraum (48) aufweist.

2. Teefilter nach Anspruch 1,
**dadurch gekennzeichnet**,
daß, in Strömungsrichtung des aus der Kaffee- oder Teemaschine (18) austretenden Heißwassers gesehen, vor dem ersten Ventil (36) an der Wasserleiteinrichtung (14) eine Strömungsmittelverbindung (90) zum Ziehraum (48) hin ausgebildet ist.

3. Teefilter nach Anspruch 2,
**dadurch gekennzeichnet**,
daß der Ziehraum (48) einen Überlauf (88) aufweist.

4. Teefilter nach Anspruch 2 und 3,
**dadurch gekennzeichnet**,
daß die Strömungsmittelverbindung (90) und der Überlauf (88) von Sieben (94, 96) gebildet werden.

5. Teefilter nach Anspruch 1,
**dadurch gekennzeichnet**,
daß das Wasserleitrohr (14) einstückig mit einem den Ziehraum (48) bildenden Teekorb (16) und zusammen mit diesem in einen an der Kaffee- oder Teemaschine (18) anbringbaren Filterbehälter (12) einsetzbar ist.

6. Teefilter nach Anspruch 1,
**dadurch gekennzeichnet**,
daß in der Wasserleiteinrichtung (14) ein zweites Ventil (42) ausgebildet ist, daß die Wasserleiteinrichtung (14) einen Überlauf (25) aufweist, über den bei geschlossenem zweiten Ventil (42) Heißwasser in den Ziehraum (48) gelangt.

7. Teefilter nach Anspruch 6,
**dadurch gekennzeichnet**,
daß das zweite Ventil (42) im Abfluß (44) des Teefilters (10) ausgebildet ist und daß beide Ventile (36, 42) gemeinsam betätigbar sind.

8. Teefilter nach Anspruch 7,
**dadurch gekennzeichnet**
daß das zweite Ventil (42) dem ersten Ventil (36) nachgeschaltet ist und daß beide Ventile (36, 42) den gemeinsamen Abfluß (44) benutzen.

9. Teefilter nach Anspruch 6,
**dadurch gekennzeichnet**
daß das untere Ende des Wasserleitrohrs (14) als Doppelventilkörper (98) ausgebildet ist und daß beide Ventile (36, 42) konzentrisch zueinander verlaufen.

10. Teefilter nach Anspruch 9,
**dadurch gekennzeichnet**,
daß der Doppelventilkörper (98) mit zwei nacheinander angeordneten Dichtsitzen (62 70) ausgebildet ist, die mit im Abfluß (44) korrespondierenden Dichtflächen (82, 84) zusammenwirken, wobei der Dichtring (62) mit der Dichtfläche (82) das erste Ventil (36) und der Dichtsitz (70) mit der Dichtfläche (84) das zweite Ventil (42) bildet.

11. Teefilter nach Anspruch 10,
**dadurch gekennzeichnet**,
daß am Boden (13) ein Hohlzylinderabschnitt (32) ausgebildet ist, in den das freie Ende des Wasserleitrohrs (14) hineinragt, daß am Außenumfang des freien Endes des Wasserleitrohres (14) der Dichtring (62) einerseits und die Innenwandung des Hohlzylinderabschnitts (32) andererseits die Dichtfläche (82) des ersten Ventils (36) bilden und daß das freie Ende des Wasserleitrohres (14) mit einer Kappe (66) mit seitlichen Öffnungen (86) versehen ist, die den Durchlaß des Wassers zum zweiten Ventil (42) gestatten, wobei sich an den Hohlzylinderabschnitt (32) ein Hohlkegel (38) mit einer Dichtfläche (84) anschließt, der mit an der Kappe (66) ausgebildetem Dichtsitz (70) das zweite Ventil (42) bildet.

12. Teefilter nach Anspruch 11,
**dadurch gekennzeichnet**,
daß die Betätigung der beiden Ventile (36, 42) durch Anheben und Absenken des Teekorbs (16) mit dem Wasserleitrohr (14) mittels einer Hubvorrichtung (72) erfolgt und daß die Hubvorrichtung (72) zwischen dem Filterbehälter (12) und dem Teekorb (16) ausgebildete ist.

13. Teefilter nach Anspruch 9,
**dadurch gekennzeichnet**,
daß die Öffnung (100) am unteren Ende des Wasserleitrohres (14) mit einem Stopfen (102) versehen ist, daß am Übergang vom Stopfen (102) zum Wasserleitrohr (14) Ablauföffnungen (104) ausgebildet sind, daß die Ablauföffnungen (104) das erste Ventil (36) vom zweiten Ventil (42) trennen, daß beide Ventile (36, 42) je eine Dichtfläche (106, 108) aufweisen, die mit einer gemeinsamen Dichtung (110) zusammenwirken, welche ihrerseits im Abfluß (44) des Filterbehälters (12) befestigt ist.

14. Teefilter nach Anspruch 12,
**dadurch gekennzeichnet**,
daß die Dichtung (110) eine den Durchlaß (44) bildende Öffnung (112) aufweist, die von einem am Stopfen (102) ausgebildeten Fortsatz (114) durchdrungen wird, und daß am Fortsatz (114) eine Hubeinrichtung (116) vorgesehen ist, durch die die beiden Ventile (36, 42) steuerbar sind.

15. Teefilter nach einem der vorhergehenden Ansprüche,
**dadurch gekennzeichnet**,
daß der Ziehraum (48) des Teefilters (10) etwa 20 % bis 60 %, vorzugsweise 50 %, des Filterbehälters (12) einnimmt.

16. Teefilter nach einem der vorhergehenden Ansprüche,
**dadurch gekennzeichnet**,
daß der Teefilter (10) einen Überlauf (52, 88) aus dem Ziehraum (48) aufweist.

17. Teefilter nach einem der vorhergehenden Ansprüche,
**dadurch gekennzeichnet**,
daß der Überlauf (52, 88) am Ziehraum (48) eine Rückhalteeinrichtung (57, 96) für Teeblätter aufweist.

## Claims

1. A tea filter assembly (10) for a coffee or tea maker, having an infusion chamber (48) which is adapted to be loaded with tea leaves or tea bags (tea material) and is supplied with hot water from a discharge port (20), and having a valve (36) downstream from the infusion chamber (48) for closing the outlet (44) of the brewed beverage flowing out of the infusion chamber (48), said tea filter assembly (10) including a water conducting device (14) by means of which the hot water arriving from the coffee or tea maker (18) is selectively deliverable either to the infusion chamber (48) with the valve (36) in closed position, or, with the valve (36) in open position, through the water conducting device (14) to a container (27), bypassing the infusion chamber (48),
**characterized in that** the water conducting device (14) is comprised of a water conduit (14) arranged underneath the hot water discharge port (20) and extending down to the outlet (44), that the complete extraction water flows into the water conduit (14), and that the water conduit (14) includes a fluid connection (90, 22) with the infusion chamber (48).

2. The tea filter assembly as claimed in claim 1,
**characterized in that,** as seen looking in the direction of flow of the hot water emanating from the coffee or tea maker (18), a fluid connection (90) communicating with the infusion chamber (48) is provided on the water conducting device (14) upstream from the first valve (36).

3. The tea filter assembly as claimed in claim 2,
**characterized in that** the infusion chamber (48) includes an overflow device (88).

4. The tea filter assembly as claimed in claims 2 and 3,
**characterized in that** the fluid connection (90) and the overflow device (88) are formed by strainers (94, 96).

5. The tea filter assembly as claimed in claim 1,
**characterized in that** the water conduit (14) is integrally formed with a tea basket (16) forming the infusion chamber (48) and is insertable together with said basket in a filter basket holder (12) adapted to be fitted to the coffee or tea maker (18).

6. The tea filter assembly as claimed in claim 1,
**characterized in that** a second valve (42) is provided in the water conducting device (14), that the water conducting device (14) includes an overflow device (25) through which hot water enters the infusion chamber (48) with the second valve (42) in closed position.

7. The tea filter assembly as claimed in claim 6,
**characterized in that** the second valve (42) is provided in the outlet (44) of the tea filter assembly (10), and that both valves (36, 42) are adapted to be actuated jointly.

8. The tea filter assembly as claimed in claim 7,
**characterized in that** the second valve (42) is arranged downstream from the first valve (36), and that both valves (36, 42) use the common outlet (44).

9. The tea filter assembly as claimed in claim 6,
**characterized in that** the lower end of the water conduit (14) is configured as a dual valve structure (98), and that both valves (36, 42) extend concentrically with each other.

10. The tea filter assembly as claimed in claim 9,
**characterized in that** the dual valve structure (98) is formed with two sealing seats (62, 70) arranged in succession and cooperating with corresponding sealing faces (82, 84) in the outlet (44), with the sealing ring (62) cooperating with the sealing face (82) to form the first valve (36), and the sealing seat (70) cooperating with the sealing face (84) to form the second valve (42).

11. The tea filter assembly as claimed in claim 10,
**characterized in that** a hollow cylinder section (32) into which the free end of the water conduit (14) extends is provided at the bottom (13), that on the outer circumference of the free end of the water conduit (14) the sealing ring (62) on the one side and the inner wall of the hollow cylinder section (32) on the other side form the sealing face (82) of the first valve (36), and that the free end of the water conduit (14) is provided with a cap (66) having lateral openings (86) allowing the passage of water to the second valve (42), with the hollow cylinder section (32) being adjoined by a hollow cone (38) having a sealing face (84) which cooperates with the sealing seat (70) provided on the cap (66) to form the second valve (42).

12. The tea filter assembly as claimed in claim 11,
**characterized in that** actuation of the two valves (36, 42) is effected by raising and lowering the tea basket (16) together with the water conduit (14) by means of a lifting device (72), and that the lifting device (72) is arranged between the filter basket holder (12) and the tea basket (16).

13. The tea filter assembly as claimed in claim 9,
**characterized in that** the opening (100) at the lower end of the water conduit (14) is provided with a plug (102), that drain holes (104) are provided in the transition area from the plug (102) to the water conduit (14), that the drain holes (104) separate the first valve (36) from the second valve (42), and that both valves (36, 42) have each a sealing face (106, 108) cooperating with a common seal structure (110) which is in turn secured in the outlet (44) of the filter basket holder (12).

14. The tea filter assembly as claimed in claim 12,
**characterized in that** the seal structure (110) includes an opening (112) forming the outlet (44) and being penetrated by an extension (114) formed on the plug (102), and that a lifting device (116) adapted to control the two valves (36, 42) is provided on the extension (114).

15. The tea filter assembly as claimed in any one of the preceding claims,
**characterized in that** the infusion chamber (48) of the tea filter assembly (10) occupies about 20 % to 60 %, preferably 50 %, of the space of the filter basket holder (12).

16. The tea filter assembly as claimed in any one of the preceding claims,
**characterized in that** the tea filter assembly (10) includes an overflow device (52, 88) for the overflow from the infusion chamber (48).

17. The tea filter assembly as claimed in any one of the preceding claims,
**characterized in that** the overflow device (52, 88) on the infusion chamber (48) includes a retention device (57, 96) for holding back tea leaves.

## Revendications

1. Filtre à thé (10) pour une machine à préparer du café ou du thé, comportant une chambre d'infusion (48) susceptible d'être remplie de feuilles de thé ou de sachets de thé (thé proprement dit) et alimentée en eau bouillante à partir d'une ouverture de distribution (20) comportant une soupape montée en aval de la chambre d'infusion (48), destinée à fermer l'écoulement (44) de la boisson chaude s'écoulant hors de la chambre d'infusion (48), un dispositif de conduite d'eau (14) étant prévu dans le filtre à thé (10), au moyen duquel l'eau bouillante provenant de la machine à café ou à thé (18) est susceptible d'être amenée au choix dans la chambre d'infusion (48) lorsque la soupape (36) est fermée ou, lorsque la soupape (36) est ouverte, d'être conduite via le dispositif de conduite d'eau (14) jusque dans un récipient (27), en passant à côté de la chambre d'infusion (48), caractérisé en ce que le dispositif de conduite d'eau (14) est constitué par un tuyau de conduite d'eau (14) agencé au-dessous de l'ouverture de distribution (20) d'eau bouillante et s'étendant vers le bas jusqu'à l'écoulement (44), en ce que toute l'eau bouillante coule dans le tuyau de conduite d'eau (14), et en ce que le tuyau de conduite d'eau (14) présente une liaison (90, 22) vers la chambre d'infusion (48).

2. Filtre à thé selon la revendication 1, caractérisé en ce que, vu en direction d'écoulement de l'eau bouillante sortant de la machine à café ou à thé (18), une liaison d'écoulement (90) est réalisée en amont de la première soupape (36) sur le dispositif de conduite d'eau (14) en direction de la chambre d'infusion (48).

3. Filtre à thé selon la revendication 2, caractérisé en ce que la chambre d'infusion (48) présente un trop-plein (88).

4. Filtre à thé selon les revendication 2 et 3, caractérisé en ce que la liaison d'écoulement (90) et le trop-plein (88) sont formés par des tamis (94, 96).

5. Filtre à thé selon la revendication 1, caractérisé en ce que le tuyau de conduite d'eau (14) est réalisé d'une seule pièce avec une corbeille à thé (16) formant la chambre d'infusion (48) et susceptible d'être mis en place avec celle-ci dans un porte-filtre (12) qui peut être monté sur la machine à café ou à thé (18).

6. Filtre à thé selon la revendication 1, caractérisé en ce que dans le dispositif de conduite d'eau (14) est réalisée une seconde soupape (42), en ce que le dispositif de conduite d'eau (14) présente un trop-plein (25) par l'intermédiaire duquel l'eau bouillante parvient dans la chambre d'infusion (48) lorsque la seconde soupape (42) est fermée.

7. Filtre à thé selon la revendication 6, caractérisé en ce que la seconde soupape (42) est réalisée dans l'écoulement (44) du filtre à thé (10), et en ce que les deux soupapes (36, 42) sont susceptibles d'être actionnées en commun.

8. Filtre à thé selon la revendication 7, caractérisé en ce que la seconde soupape (42) est montée en aval de la première soupape (36), et en ce que les deux soupapes (36, 42) utilisent le même écoulement (44).

9. Filtre à thé selon la revendication 6, caractérisé en ce que l'extrémité inférieure du tuyau de conduite d'eau (14) est réalisée sous la forme d'un corps de soupape double (98), et en ce que les deux soupapes (36, 42) s'étendent de manière concentrique l'une par rapport à l'autre.

10. Filtre à thé selon la revendication 9, caractérisé en ce que le corps de soupape double (98) est réalisé avec deux sièges d'étanchéité (62, 70) agencés l'un derrière l'autre, qui coopèrent avec des surfaces d'étanchéité (82, 84) correspondantes dans l'écoulement (44), la bague d'étanchéité (62) formant avec la surface d'étanchéité (82) la première soupape (36) et le siège d'étanchéité (70) formant avec la surface d'étanchéité (84) la seconde soupape (42).

11. Filtre à thé selon la revendication 10, caractérisé en ce que sur le fond (13) est réalisé un tronçon cylindrique creux (32) dans lequel s'engage l'extrémité libre du tuyau de conduite d'eau (14), en ce que sur la périphérie extérieure de l'extrémité libre du tuyau de conduite d'eau (14), la bague d'étanchéité (62) d'une part, et la paroi intérieure du tronçon cylindrique creux (32) d'autre part, forment la surface d'étanchéité (82) de la première soupape (36), et en ce que l'extrémité libre du tuyau de conduite d'eau (14) est pourvue d'un capuchon (66) avec des ouvertures latérales (86) qui permettent le passage de l'eau vers la seconde soupape (42), et un cône creux (38), doté d'une avec une surface d'étanchéité (84), lequel forme la seconde soupape (42) avec le siège d'étanchéité (70) réalisé sur le capuchon (66), se raccorde au tronçon cylindrique creux (32).

12. Filtre à thé selon la revendication 11, caractérisé en ce que l'actionnement des deux soupapes (36, 42) est produit en montant et en descendant la corbeille à thé (16) avec le tuyau de conduite d'eau (14) au moyen d'un système de levage (72) et en ce que le système de levage (72) est réalisé entre le porte-filtre (12) et la corbeille à thé (16).

13. Filtre à thé selon la revendication 9, caractérisé en ce que l'ouverture (100) située à l'extrémité inférieure du tuyau de conduite d'eau (14) est pourvue d'un bouchon (102), en ce que des orifices d'écoulement (104) sont réalisés à la transition du bouchon (102) vers le tuyau de conduite d'eau (14), en ce que les orifices d'écoulement (104) séparent la première soupape (36) de la seconde soupape (42), et en ce que les deux soupapes (36, 42) présentent chacune une surface d'étanchéité (106, 108) qui coopèrent avec un joint (110) commun qui est fixé pour sa part dans l'écoulement (44) du porte-filtre (12).

14. Filtre à thé selon la revendication 12, caractérisé en ce que le joint (110) présente une ouverture (112) formant le passage (44), laquelle est traversée par un prolongement (114) réalisé sur le bouchon (102), et en ce que sur le prolongement (114) est prévu un dispositif de levage (116) grâce auquel les deux soupapes (36, 42) sont susceptibles d'être commandées.

15. Filtre à thé selon l'une quelconque des revendications précédentes, caractérisé en ce que la chambre d'infusion (48) du filtre à thé (10) occupe approximativement 20 % à 60 %, de préférence 50 % du porte-filtre (12).

16. Filtre à thé selon l'une quelconque des revendications précédentes, caractérisé en ce que le filtre à thé (10) présente un trop-plein (52, 88) en provenance de la chambre d'infusion (48).

17. Filtre à thé selon l'une quelconque des revendications précédentes, caractérisé en ce que le trop-plein (52, 88) au niveau de la chambre d'infusion (48) présente un dispositif de retenue (57, 96) pour les feuilles de thé.
